Europäisches Patentamt

European Patent Office

Office européen des brevets

(11) Numéro de publication : **0 392 901 B1**

(12) FASCICULE DE BREVET EUROPEEN

(45) Date de publication du fascicule du brevet :
03.06.92 Bulletin 92/23

(21) Numéro de dépôt : **90400941.2**

(22) Date de dépôt : **05.04.90**

(51) Int. Cl.⁵ : **F16L 23/04**

(54) **Raccord perfectionné pour conduits de fluide, notamment de gaz de grande pureté.**

(30) Priorité : **12.04.89 FR 8904836**

(43) Date de publication de la demande :
**17.10.90 Bulletin 90/42**

(45) Mention de la délivrance du brevet :
**03.06.92 Bulletin 92/23**

(84) Etats contractants désignés :
**BE CH DE DK ES GB IT LI NL SE**

(56) Documents cités :
**DE-A- 2 209 117**
**DE-A- 2 819 921**
**DE-B- 2 405 827**
**GB-A- 1 258 305**
**US-A- 3 775 832**

(73) Titulaire : **Sabatier, André**
**83, avenue du Président Kennedy**
**F-94190 Villeneuve Saint-Georges (FR)**
Titulaire : **Depraetere, Raymond**
**1, rue des Coquelicots**
**F-91000 Evry (FR)**

(72) Inventeur : **Sabatier, André**
**83, avenue du Président Kennedy**
**F-94190 Villeneuve Saint-Georges (FR)**
Inventeur : **Depraetere, Raymond**
**1, rue des Coquelicots**
**F-91000 Evry (FR)**

(74) Mandataire : **Plaçais, Jean-Yves et al**
**Cabinet Netter, 40, rue Vignon**
**F-75009 Paris (FR)**

## Description

L'invention concerne le raccordement de conduit de fluide.

Elle s'applique avantageusement, mais non limitativement, à la fabrication de composants microélectroniques qui nécessite l'utilisation de gaz de très haute pureté, notamment lors des phases de diffusion.

Pour une telle application, il est nécessaire d'assurer une très bonne étanchéité au niveau du raccordement des conduits véhiculant le gaz de haute pureté, afin, d'une part, d'éviter les fuites, et d'autre part, d'empêcher l'entrée d'agents extérieurs dans les conduits, susceptibles de provoquer par exemple l'oxydation de ces derniers par interaction avec le gaz transporté. Une telle oxydation nuirait alors à terme à la qualité de fabrication des composants.

Il convient également d'éviter autant que possible les micro-arrachements de matière qui peuvent éventuellement se produire lors de l'opération mécanique de raccordement des conduits de fluide.

Il est encore souhaitable de minimiser la masse de tels raccords lorsque ceux-ci sont utilisés dans certains domaines, notamment aérospatiaux, dans lesquels le facteur poids est déterminant.

Le problème posé par les raccords actuellement connus (par exemple GB-A-1258305) réside dans le fait que ceux-ci ne respectent que partiellement l'ensemble des contraintes exposées ci-avant. De plus, ce respect, même partiel, impose généralement une sophistication du produit, ce qui en complique le montage, en augmente le poids et peut grever les coûts de production.

L'invention a pour but d'apporter une solution à ce problème.

Un but de l'invention est de proposer un raccord pour conduit de fluide assurant une très bonne étanchéité au niveau du raccordement.

Un autre but de l'invention est de proposer un raccord n'utilisant pas de joint d'étanchéité proprement dit, ce qui en facilite le montage.

Pour, notamment faciliter encore le montage et diminuer les coûts de production, l'invention vise à proposer un raccord ne comportant pas d'éléments mâle ni femelle.

Un autre but de l'invention est de proposer un raccord dont l'opération mécanique de raccordement proprement dite ne conduit pas à des micro-arrachements de matière.

L'invention a encore pour but de proposer un raccord de faible masse et de faible coût de production.

L'invention vise donc un raccord pour conduits de fluide, du type comprenant deux embouts, ayant chacun une extrémité de fixation sur au moins un conduit respectif, et une face libre de raccordement, ainsi que des moyens de serrage mutuel de ces deux embouts opposés par leur face libre.

Selon une caractéristique générale de l'invention, chaque embout comporte un corps métallique coaxial, alésé intérieurement en continuité de diamètre avec le conduit et offrant extérieurement, à partir de l'extrémité de fixation, une portée conique s'évasant vers une portée cylindrique ; celle-ci est suivie d'au moins un épaulement plan en retrait vers une partie cylindrique centrale qui se termine par une section annulaire radiale rodée ou aboutit l'alésage interne.

Chaque embout comporte également une rondelle de forme externe cylindrique en matière synthétique déformable, propre à s'emmancher à contact sur la partie cylindrique centrale de façon à venir en butée contre ledit épaulement plan ; cette rondelle cylindrique possède une paroi annulaire radiale qui, avec la section rodée de la partie cylindrique centrale, forme la face libre de raccordement de l'embout ; il est également prévu une bague cylindrique allongée, métallique, propre à loger intérieurement à contact les deux rondelles et une partie au moins de chacune des deux portées cylindriques desdits embouts mis face à face, de sorte que les deux faces libres de raccordement viennent en regard l'une de l'autre ;

les moyens de serrage mutuels comprennent alors deux demi-coquilles possédant deux portées coniques homologues des deux portées coniques respectives des deux corps métalliques, l'enserrage de ces deux demi-coquilles assurant le raccordement des conduits de fluide.

Très avantageusement, les caractéristiques géométriques des embouts sont choisies pour permettre, lors de l'enserrage des deux demi-coquilles, d'abord une compression des deux rondelles en matière synthétique déformable, puis un contact entre les deux sections annulaires rodées.

Selon un mode de réalisation, pour la réalisation de cette compression, le plan de la section annulaire radiale rodée de chaque embout est situé, avant raccordement, légèrement en retrait par rapport au plan de la paroi radiale de la rondelle correspondante.

Afin notamment d'éviter l'arrachement de matière lors de l'opération mécanique de raccordement, le matériau synthétique de chaque rondelle présente avantageusement un faible coefficient de frottement relativement au matériau de la bague allongée.

Dans une variante de l'invention, la portée cylindrique de chaque embout est suivie d'au moins deux épaulements successifs plans en retrait vers ladite partie cylindrique centrale.

D'autres avantages et caractéristiques de l'invention apparaîtront à l'examen de la description détaillée ci-après et des dessins annexés, sur lesquels :

– la figure 1 est une vue en perspective d'un premier mode de réalisation du raccord selon l'invention, non assemblé ;

– la figure 2 est une coupe longitudinale d'un embout du raccord de la figure 1, avant raccordement ;

– la figure 3 est une coupe longitudinale du raccord de la figure 1, après raccordement ;

– la figure 4 illustre, avant raccordement, un autre mode de réalisation d'un embout faisant partie d'un raccord selon l'invention ; et

– la figure 5 illustre, après raccordement, cet autre mode de réalisation du raccord.

Les dessins comportent, pour l'essentiel, des éléments géométriques de caractère certain. A ce titre, ils font partie intégrante de la description et pourront non seulement servir à mieux faire comprendre la description détaillée ci-après mais aussi contribuer, le cas échéant, à la définition de l'invention.

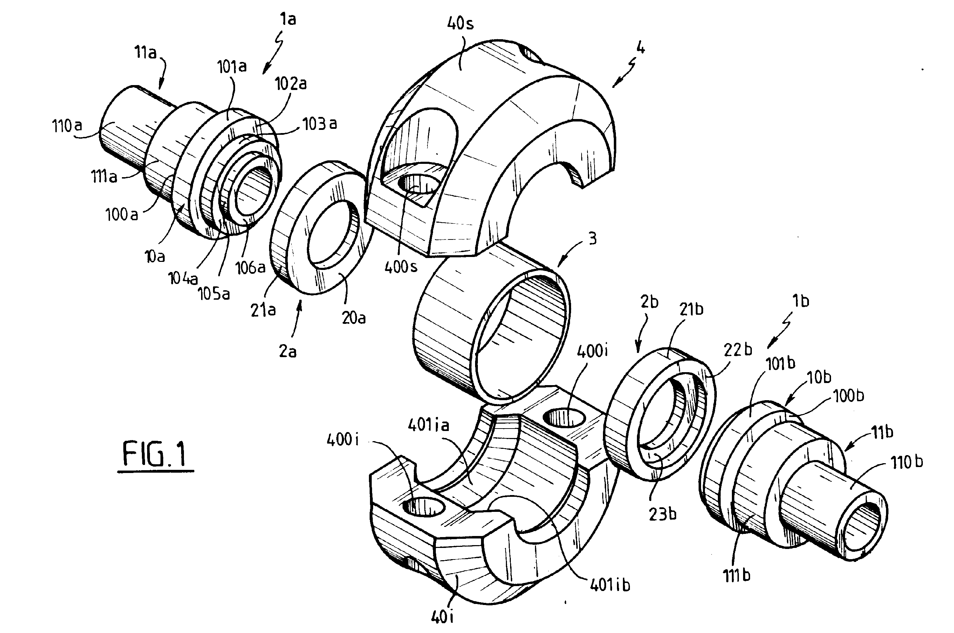

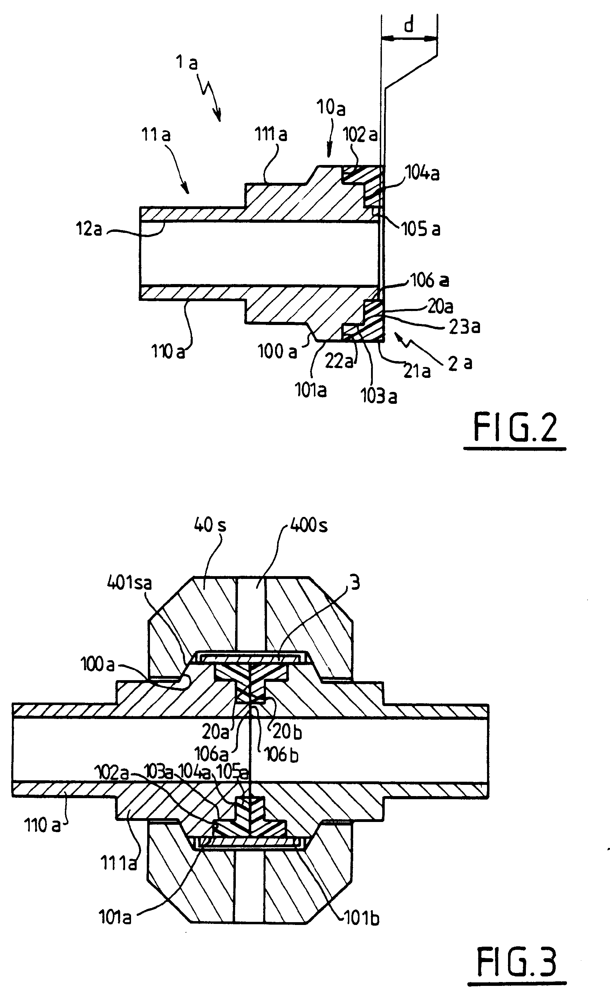

Tel qu'illustré sur la figure 1, le raccord comprend deux embouts de conduit identiques 1a, 1b, coaxiaux, une bague métallique allongée 3 ainsi que deux demi-coquilles métalliques de serrage 4. Les éléments constitutifs de l'embout 1a porte des références affectées de la lettre a et ceux de l'embout 1b portent des références affectées de la lettre b. A des fins de simplification, on ne décrira ci-après que l'embout 1a en se référant également à la figure 2.

L'embout 1a, d'une longueur de quelques millimètres à quelques dizaines de millimètres, possède une extrémité de fixation 11a pour un conduit de fluide non représenté sur ces figures. Le terme "longueur" désigne ici et ci-après une dimension mesurée parallèlement à un axe de symétrie longitudinal. Cette extrémité de fixation 11a comporte ici une partie cylindrique d'extrémité 110a, suivie d'une autre partie cylindrique 111a de plus grand diamètre. Cet embout possède un alésage interne central 12a en continuité de diamètre avec le conduit de fluide lorsque celui-ci est fixé sur l'embout.

L'extrémité de fixation 11a se prolonge par un corps métallique 10a également coaxial. Ce corps offre extérieurement, à partir de la partie cylindrique 111a, une portée conique 100a s'évasant vers une portée cylindrique 101a d'un diamètre de 12 mm environ et d'une longueur de 1,8 mm environ.

Cette portée cylindrique 101a est suivie d'un premier épaulement annulaire radial plan 102a, en retrait, qui la raccorde à une portée cylindrique intermédiaire 103a d'un diamètre de 9,7 mm environ et d'une longueur de 1,5 mm environ . Cette dernière portée cylindrique est également suivie d'un deuxième épaulement annulaire radial plan en retrait 104a qui la raccorde à une partie cylindrique central 105a d'un diamètre de 6,5 mm environ et d'une longueur de 1 mm environ. Cette partie cylindrique centrale 105a se termine par une section annulaire radiale rodée 106a où aboutit l'alésage interne 12a.

Un autre élément essentiel de l'embout consiste en une rondelle 2a en une matière synthétique déformable telle que du polytétrafluoroéthylène commercialisé sous la marque "Téflon".

Cette rondelle, dont l'enveloppe 21a est un cylindre d'un diamètre externe sensiblement égal à celui de la portée cylindrique 101a du corps métallique, possède une face arrière annulaire plane 22a venant en butée contre le premier épaulement plan 102a du corps métallique. Cette rondelle possède également une autre face arrière annulaire plane 23a, d'un diamètre plus petit que celui de la face arrière 22a, venant en butée contre le deuxième épaulement annulaire plan 104a du corps métallique.

La longueur de la face latérale externe 21a de cette rondelle est de 2,54 mm environ. Ainsi, lorsque cette rondelle est emmanchée à contact sur la partie cylindrique centrale 105a et sur la portée cylindrique intermédiaire 103a de l'embout, le plan de sa paroi annulaire radiale plane avant 20a, déborde d'une distance d égale à environ 5/100ème de mm du plan de la section annulaire rodée 106a de l'embout. En d'autres termes, cette section annulaire rodée est située légèrement en retrait par rapport à la paroi annulaire 20a de la rondelle.

L'embout ainsi constitué possède alors une face libre de raccordement constituée par la section radiale rodée 106a du corps métallique et par la paroi libre 20a de la rondelle en Téflon 2a.

Pour procéder au raccordement proprement dit, il est prévu une bague cylindrique allongée métallique 3 ayant une longueur de 7 mm environ, un diamètre externe de 12,6 mm environ et une épaisseur de 0,3 mm environ. Il convient donc de remarquer que le diamètre interne de cette bague est ajustée de façon à être sensiblement égal à celui de la face externe 21 de chaque rondelle 2 ainsi qu'à celui de la portée cylindrique 101 de chaque corps métallique.

Lors de l'opération de raccordement proprement dite, les deux embouts sont placés en regard l'un de l'autre par leur face libre de raccordement et la bague cylindrique allongée est glissée autour de ceux-ci pour loger intérieurement à contact les deux rondelles en Téflon et une partie de chacune des deux portées cylindriques 101a et 101b des corps métalliques.

Une première fonction de cette bague allongée 3 et donc d'assurer un excellent alignement des deux embouts de façon à assurer un centrage aussi parfait que possible de leur alésage interne. Lors de la mise en place de cette bague 3, le faible coefficient de frottement du Téflon relativement au matériau de la bague permet un glissement de cette dernière sans micro-arrachements de matière tant au niveau des rondelles 2 qu'au niveau de la bague 3. L'homme de l'art remarque donc que, d'une façon générale, une première condition à respecter pour le matériau constitutif des rondelles 2 est de présenter un faible coefficient de frottement relativement au matériau de la bague 3.

Une fois les deux embouts alignés à l'aide de la bague 3, deux demi-coquilles 40s et 40i possédant sur leur face interne respective deux demi-portées coniques 401sa, 401sb et 401ia, 401ib, sont mis en place autour des deux embouts et de la bague. Ces quatre demi-portées coniques définissent alors deux portées coniques 401a et 401b coopérant avec les deux portées coniques 100a et 100b des embouts. L'enserrage des deux demi-coquilles est assuré par deux vis (non représentées sur les figures) coopérant avec des passages 400s et 400i ménagés dans celles-ci.

Lors de l'opération de serrage, la coopération des portées coniques des deux demi-coquilles et des embouts permet, tout d'abord, une compression axiale des deux rondelles en Téflon 2a, puis un contact des deux sections rodées 106a et 106b. Ceci est obtenu d'une part en raison de la distance d séparant la paroi libre de chaque rondelle de la section rodée du corps métallique et, d'autre part, en raison du caractère déformable du Téflon. Ce caractère déformable constitue alors une deuxième condition que doit réaliser, d'une façon générale, le matériau constitutif des rondelles 2a et 2b. A cet effet, on utilisera un matériau plus tendre que l'acier inoxydable (316 L par exemple) constitutif du raccord. Des matériaux convenables sont, outre le polytétrafluoréthylène, ses dérivés comme par exemple un élastomère fluoré connu sous la dénomination KEL-F, ou d'autres matériaux synthétiques utilisés en connectique de gaz.

Le raccord ainsi constitué possède un unique plan d'étanchéité constitué d'une part par l'interface des deux rondelles 2 et d'autre part par l'interface des deux sections rodées 106. Une double étanchéité est ainsi réalisée, d'une part, au niveau des rondelles, d'autre part, au niveau des sections rodées et ce, sans l'interposition d'un joint d'étanchéité proprement dit. De plus, les caractéristiques géométriques de la bague 3, réalisée d'un seul tenant, d'une longueur et d'une épaisseur choisies, permettent, tout au long du serrage, d'assurer un excellent guidage des deux embouts de façon à maintenir leur alignement.

L'étanchéité d'un tel raccord, mesurée au cours d'essais, est inférieure à $10^{-9}$ cm³.s⁻¹ d'Hélium, pour une différence de pression de 1 atmosphère entre l'alésage interne du raccord et l'extérieur, pour une surface d'étanchéité unitaire de 1 cm². Le raccord selon l'invention permet donc d'obtenir une très bonne étanchéité avec un minimum de pièces, notamment sans joint d'étanchéité proprement dit. De plus, un tel raccord, comportant des embouts identiques, ne nécessite pas la fabrication de pièces mâle, ni femelle facilite son montage et diminue les coûts de production série.

Un raccord de ce type est particulièrement bien adapté au raccordement de conduits de gaz, notamment de grande pureté, tels que l'hydrogène, l'argon, l'oxygène, l'anhydride chlorhydrique et d'autres gaz utiles en fabrication des semi-conducteurs comme le chlorure de phosphoryle ($POCl_3$), le tribromure de bore ($BBr_3$), le trichloréthylène, l'arsine ($AsH_3$), le silane ($SiH_4$). Il convient également en connectique de fabrication pharmaceutique.

Un tel raccord peut également résister aux hautes pressions, typiquement jusqu'à plusieurs centaines de bars, et le matériau constitutif des rondelles 2 est choisi également pour résister à une attaque acide.

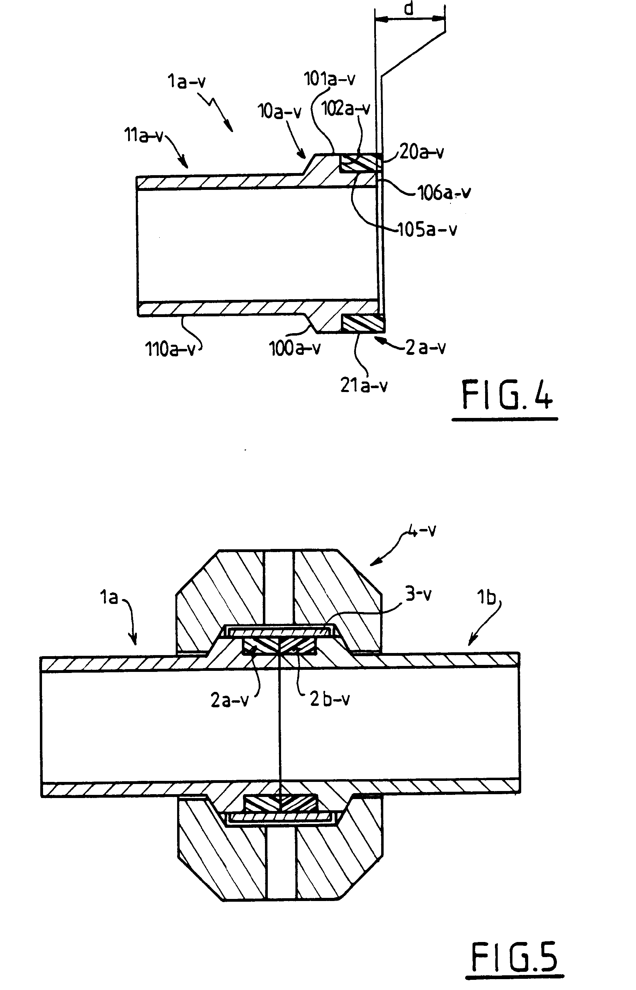

Les figures 4 et 5 illustrent un autre mode de réalisation du raccord selon l'invention, plus particulièrement adapté au raccordement de conduits de fluide ayant un diamètre d'environ 0,95 cm (3/8ème de pouce).

Les éléments analogues ou ayant des fonctions analogues à ceux représentés sur les figures 1 à 3 ont des références affectées du suffixe v par rapport à celles qu'ils avaient sur les figures 1 à 3. Seules les différences entre ces deux modes de réalisation seront décrites ci-après.

L'extrémité de fixation 11a-v comporte uniquement la partie cylindrique d'extrémité 110a-v reliée aux portées coniques 100a-v du corps métallique 10a-v. La portée cylindrique 101a-v du corps métallique n'est suivie que d'un seul épaulement plan en retrait 102a-v vers la partie cylindrique centrale 105a-v.

La rondelle en Téflon 2a-v n'est constituée que d'un seul cylindre d'un diamètre externe égal à 12 mm environ et d'un diamètre interne égal à 9,7 mm environ. Elle vient en butée contre l'épaulement annulaire 102a-v et le plan de sa paroi annulaire radiale 20a-v déborde également de 5/100ème de mm du plan de la section annulaire rodée 106a-v du corps métallique.

Les caractéristiques géométriques de la bague allongée 3-v ainsi que des moyens de serrage 4-v sont ajustées compte tenu des dimensions de ce raccord.

L'invention n'est pas limitée aux modes de réalisation ci-dessus décrits mais en embrasse toutes les variantes, notamment les suivantes :

– on a décrit ci-avant deux embouts identiques. On pourrait concevoir que seuls les corps métalliques et les rondelles en matière synthétique déformable de ceux-ci soient identiques. En effet, les extrémités de fixation peuvent prendre diverses formes, coudées ou autres, de façon à se raccorder sur des conduits de types divers, voire sur plusieurs conduits à la fois, ou encore faire partie d'un composant fluidique tel que vanne ou filtre. L'absence de parties mâle et femelle facilite considérablement les connexions ;

– le nombre d'épaulements plans en retrait situés entre la portée cylindrique de chaque embout et la partie cylindrique centrale, n'est bien sûr pas limitatif. Avantageusement, le recours à un ou deux épaulements permet de fabriquer une gamme de raccords pour conduits de diamètres divers comme 2 à 6 mm, 6 à 10 mm et 10 à 15 mm, chaque portion de gamme utilisant la même ébauche, c'est-à-dire présentant une portée cylindrique 101 de même diamètre et des portées coniques 100 analogues permettant d'employer des bagues et des coquilles de serrage analogues pour toutes les gammes.

## Revendications

1. - Raccord pour conduits de fluide, du type comprenant deux embouts (1a,1b), ayant chacun une extrémité de fixation (11a, 11b) sur au moins un conduit respectif, et une face libre de raccordement, ainsi que des moyens de serrage mutuel (4) de ces deux embouts opposés par leur face libre, dans lequel chaque embout (1a) comporte :

. un corps métallique coaxial (10a), alésé intérieurement (12a) en continuité de diamètre avec le conduit, et offrant extérieurement, à partir de ladite extrémité (11a), une portée conique (100a) s'évasant vers une portée cylindrique (101a), suivie d'au moins un épaulement plan en retrait (102a) vers une partie cylindrique centrale (105a) se terminant par une section annulaire radiale rodée (106a) où aboutit l'alésage interne (12a), et

. une rondelle de forme externe cylindrique (2a) en matière synthétique déformable, propre à s'emmancher à contact sur la partie cylindrique centrale (105a), en butée contre ledit épaulement plan (102a), et possédant une paroi annulaire radiale plane (20a) qui, avec ladite section rodée (106a), forme la face libre de raccordement,

dans lequel il est prévu une bague cylindrique allongée (3) métallique, propre à loger intérieurement à contact les deux rondelles (2a,2b) et une partie au moins de chacune des deux portées cylindriques (101a,101b) desdits embouts mis face à face, de sorte que les deux faces libres de raccordement viennent en regard l'une de l'autre,

et dans lequel les moyens de serrage (4) comprennent deux demi-coquilles (40s,40i) possédant deux portées coniques (401sa, 401sb,401ia,401ib) homologues des deux portées coniques respectives (100a,100b) des deux corps métalliques coaxiaux, l'enserrage de ces deux demi-coquilles assurant le raccordement des conduits de fluide.

2. Raccord selon la revendication 1, caractérisé en ce qu'il présente une étanchéité inférieure ou égale à $10^{-9}$ cm$^3$.s$^{-1}$ d'Hélium, pour une différence de pression de 1 atmosphère entre l'intérieur et l'extérieur du raccord pour une surface d'étanchéité unitaire de 1 cm$^2$.

3. Raccord selon l'une des revendications 1 et 2, caractérisé en ce que les caractéristiques géométriques des embouts sont choisies pour permettre, lors de l'enserrage des deux demi-coquilles, une compression des deux rondelles en matière synthétique déformable suivie d'un contact entre les deux sections annulaires rodées.

4. Raccord selon la revendication 3, caractérisé en ce que, avant raccordement, le plan de la section annulaire radiale rodée (106a) de chaque embout (2a) est situé légèrement en retrait par rapport au plan de la paroi annulaire radiale plane (20a) de la rondelle correspondante (2a).

5. Raccord selon l'une des revendications précédentes, caractérisé en ce que le matériau synthétique déformable de chaque rondelle (2a,2b) présente un faible coefficient de frottement relativement au matériau de la bague allongée (3).

6. Raccord selon l'une des revendications précédentes, caractérisé en ce que le matériau synthétique de chaque rondelle est choisi dans le groupe formé par le polytétrafluoréthylène et ses dérivés.

7. Raccord selon l'une des revendications précédentes, caractérisé en ce que la portée cylindrique (101a) de chaque embout (1a) est suivie d'au moins deux épaulements annulaires plans en retrait (102a,104a) vers ladite partie cylindrique centrale (105a).

8. Raccord selon l'une des revendications précédentes, caractérisé en ce que la bague métallique allongée (3) est d'un seul tenant, possédant un diamètre interne sensiblement égal à celui des rondelles en matière synthétique déformable et à celui des portées cylindriques des deux embouts, et en ce que la longueur et l'épaisseur de cette bague sont choisies pour assurer un centrage correct des deux embouts.

9. Raccord selon l'une des revendications précédentes, caractérisé en ce que le fluide transporté est un gaz.

10. Raccord selon la revendication 9, caractérisé en ce que le gaz transporté est de grande pureté.

11. Raccord selon l'une des revendications 9 et 10, caractérisé en ce que le gaz transporté appartient au groupe formé par l'hydrogène, l'argon, l'oxygène, l'anhydride chlorhydrique, le chlorure de phosphoryle, le tribromure de bore, le trichloréthylène, l'arsine, le silane.

12. Raccord selon l'une des revendications précédentes, caractérisé en ce que les deux embouts sont identiques.

## Patentansprüche

1. Verbindung von Rohrleitungen für ein Fluid, enthaltend zwei Endstücke (1a, 1b), die jeweils ein Ende (11a, 11b) zur Befestigung an wenigstens einer entsprechenden Rohrleitung, und eine freie Anschlußfläche haben, und Einrichtungen (4) zum festen gegenseitigen Verbinden der zwei mit ihren freien Flächen einander gegenüberstehenden Endstücke, wobei jedes Endstück (1a) aufweist:

. einen metallischen koaxialen Körper(10a), der im Inneren mit einer durchgehenden Bohrung (12a) vom selben Durchmesser wie die Rohrleitung versehen ist und außen von dem genannten Ende (11a) ausgehend eine konische Fläche (100a) aufweist, die sich gegen eine zylindrische Fläche (101a) erweitert, der wenigstens eine zurückgesetzte ebene Schulter (102a) in Richtung auf einen zentralen zylindrischen Abschnitt (105a) folgt, der in einem ringförmigen, geschliffenen Abschnitt (106) endet, wo die Innenbohrung (12a) endet, und

. einen Ring (2a) von außen zylindrischer Gestalt aus einem verformbaren synthetischen Material, das in der Lage ist, sich in Berührung auf den zentralen zylindrischen Abschnitt (105a) anzulegen, in Anlage an die genannte ebene Schulter (102a), und der eine ringförmige radiale ebene Wand (20a) aufweist, die mit dem genannten geschliffenen Abschnitt (106a) die freie Verbindungsfläche bildet,

und wobei eine schlanke zylindrische Metallhülse (3) vorgesehen ist, die geeignet ist, an ihrer Innenseite mit den zwei Ringen (2a, 2b) und wenigstens einem Teil der beiden zylindrischen Flächen (101a, 101b) der stirnseitig in Berührung gebrachten Endstücke in Kontakt zu gelangen, so daß die zwei freien Verbindungsflächen einander gegenüberstehen, und wobei die Einrichtungen (4) zum festen gegenseitigen Verbinden zwei Halbschalen (40s, 40i) umfassen, die konische Flächen (401sa, 401sb, 401ia, 401ib) aufweisen, die zu den zwei entsprechenden konischen Flächen (100a, 100b) der zwei koaxialen Metallkörper passen, wobei die feste Verbindung dieser zwei Halbschalen die Verbindung der Fluidrohrleitungen bewirkt.

2. Verbindung nach Anspruch 1, dadurch gekennzeichnet, daß sie eine Dichtheit aufweist, die unter oder gleich 10⁻⁹ cm³.s⁻¹ für Helium ist für eine Druckdifferenz von lat zwischen dem Inneren und dem Äußeren der Verbindung für eine Dichtungseinheitsfläche von 1cm².

3. Verbindung nach einem der Ansprüche 1 und 2, dadurch gekennzeichnet, daß die geometrischen Eigenschaften der Endstücke so gewählt sind, daß sie beim Festlegen der zwei Halbschalen eine Kompression der zwei Ringe aus verformbarem synthetischem Material erlauben, die von einer Berührung zwischen den zwei ringförmigen, geschliffenen Abschnitten gefolgt wird.

4. Verbindung nach Anspruch 3 dadurch gekennzeichnet, daß vor dem Verbinden die geschliffene Fläche des ringförmigen radialen Abschnitts (106a) jedes Endstücks (2a) leicht gegenüber der Ebene der ringförmigen, radialen ebenen Wand (20a) des entsprechenden Ringes (2a) zurückgesetzt ist.

5. Verbindung nach einem der vorhergehenden Ansprüche, dadurch gekennzeichnet, daß das verformbare synthetische Material jedes Ringes (2a, 2b) einen geringen Reibungskoeffizienten in bezug auf das Material der schlanken Hülse (3) aufweist.

6. Verbindung nach einem der vorhergehenden Ansprüche, dadurch gekennzeichnet, daß das synthetische Material jedes Ringes aus der Gruppe ausgewählt ist, die von Polytetraflourethylen und seinen Derivaten gebildet ist.

7. Verbindung nach einem der vorhergehenden Ansprüche, dadurch gekennzeichnet, daß die zylindrische Fläche (101a) jedes Endstücks (1a) von wenigstens zwei ringförmigen ebenen zwückgezogenen Schultern (102a, 104a) gefolgt wird, die sich gegen den zylindrischen zentralen beschnitt (105a) erstrecken.

8. Verbindung nach einem der vorhergehenden Ansprüche, dadurch gekennzeichnet, daß die schlanke Metallhülse (3) aus einem Stück besteht und einen Innendurchmesser hat, der im wesentlichen gleich dem der Scheiben aus verformbarem synthetischem Material und dem der zylindrischen Flächen der zwei Endstücke ist und daß die Länge und die Dicke dieser Hülse so gewählt sind, daß eine korrekte Zentrierung der zwei Endstücke sichergestellt ist.

9. Verbindung nach einem der vorhergehenden Ansprüche, dadurch gekennzeichnet, daß das geleitete Fluid ein Gas ist.

10. Verbindung nach Anspruch 9, dadurch gekennzeichnet, daß das geleitete Gas von hoher Reinheit ist.

11. Verbindung nach einem der Ansprüche 9 und 10, dadurch gekennzeichnet, daß das geleitete Gas ein solches aus der Gruppe ist, die Wasserstoff, Argon, Sauerstoff, Ammoniak, Phosphorsäurechlorid, Bortribromid, Trichlorethylen, Arsenwasserstoff, Siliciumwasserstoff umfaßt.

12. Verbindung nach einem der vorhergehenden Ansprüche, dadurch gekennzeichnet, daß die beiden Endstücke identisch sind.

## Claims

1. Coupler for fluid pipes, of the type comprising two end pieces (1a, 1b) each having an extremity (11a, 11b) for fixing to at least one respective pipe, a free coupling face and means (4) for mutual clamping of these two opposing end pieces by means of their free face, in which each end piece (1a) comprises:

. a coaxial metallic body (10a), internally bored (12a) diametrally continuous with the pipe and externally presenting, from the said extremity (11a), a tapered bearing surface (100a) flaring out towards a cylindrical bearing surface (101a), followed by at least one plane shoulder (102a) cut back towards a central cylindrical portion (105a) which is terminated by a lapped radial annular section (106a) where the internal bore (12a) emerges and

. a washer (2a) of cylindrical outer shape made from deformable synthetic material, suitable for contactfitting over the central cylindrical portion (105a), butting up against the said plane shoulder (102a) and possessing a plane radial annular wall (20a) which, together with the said lapped section (106a), forms the free coupling face,

in which there is provided a metallic elongate cylindrical ring (3), suitable for being internally housed in contact with the two washers (2a, 2b) and at least one portion of each of the two cylindrical bearing surfaces (101a, 101b) of the said end pieces placed face-to-face, such that the two free coupling faces are facing each other,

and in which the clamping means (4) comprise two half-shells (40s, 40i) possessing two tapered bearing surfaces (401sa, 401sb, 401ia, 401ib) complementary to the two tapered bearing surfaces (100a, 100b) respectively of the two coaxial metallic bodies, the tight gripping of these two half-shells ensuring the coupling of the fluid pipes.

2. Coupler according to Claim 1, characterised in that it has a seal leak rate not exceeding $10^{-9}$ $cm^3.s^{-1}$ of helium for a pressure difference of 1 atmosphere between the inside and the outside of the coupler for a unitary sealing surface of 1 $cm^2$.

3. Coupler according to either of Claims 1 and 2, characterised in that the geometrical characteristics of the end pieces are chosen in order to permit, when the two half-shells are gripped tightly, a compression of the two washers made from deformable synthetic material followed by a contact between the two lapped annular sections.

4. Coupler according to Claim 3, characterised in that, before coupling, the plane of the lapped radial annular section (106a) of each end piece (1a) is slightly set back in relation to the plane of the plane radial annular wall (20a) of the corresponding washer (2a).

5. Coupler according to one of the preceding claims, characterised in that the deformable synthetic material of each washer (2a, 2b) has a low coefficient of friction with respect to the material of the elongated ring (3).

6. Coupler according to one of the preceding claims, characterised in that the synthetic material of each washer is chosen from the group formed by polytetrafluoroethylene and its derivatives.

7. Coupler according to one of the preceding claims, characterised in that the cylindrical bearing surface (101a) of each end piece (1a) is followed by at least two plane annular shoulders (102a, 104a) cut back towards the said central cylindrical portion (105a).

8. Coupler according to one of the preceding claims, characterised in that the elongate metallic ring (3) is made as a single piece possessing an inner diameter substantially equal to that of the washers made from deformable synthetic material and to that of the cylindrical bearing surfaces of the two end pieces, and in that the length and the thickness of this ring are chosen in order to ensure a correct alignment of the two end pieces.

9. Coupler according to one of the preceding claims, characterised in that the transported fluid is a gas.

10. Coupler according to Claim 9, characterised in that the transported gas is of high purity.

11. Coupler according to one of Claims 9 and 10, characterised in that the transported gas belongs to the group formed by hydrogen, argon, oxygen, hydrochloric anhydride, phosphoryl chloride, boron tribromide, trichloroethylene, arsine, silane.

12. Coupler according to one of the preceding claims, characterised in that the two end pieces are identical.

FIG.1

FIG.2

FIG.3

1a-v

11a-v

10a-v

101a-v

102a-v

d

20a-v

106a-v

105a-v

110a-v

100a-v

2a-v

21a-v

## FIG.4

4-v

1a

3-v

1b

2a-v

2b-v

## FIG.5